# EUROPÄISCHE PATENTANMELDUNG

(11) **EP 1 055 358 A2**
(43) Veröffentlichungstag der Anmeldung: **29.11.2000**
(21) Anmeldenummer: 00111425.5
(22) Anmeldetag: 26.05.2000
(51) Int. Cl.: A01D 34/68

(54) **Mähgerät**

(30) Priorität: 28.05.1999 DE 19924574
(71) Anmelder: Stella Engineering GmbH, 51688 Wipperfürth (DE)
(72) Erfinder: Stella, Alfonso, 51688 Wipperfürth (DE)
(74) Vertreter: Koch, Günther, Dipl.-Ing.

(57) **Zusammenfassung**

Es wird ein motorisch angetriebener Schlegelmäher mit Fahrantrieb beschrieben, bei welchem ein Antriebskeilriemen über eine Keilriemenscheibe geführt ist, deren Keilriemenscheiben-Hälften unabhängig voneinander drehbar sind. Die eine Keilscheiben-Hälfte ist drehfest mit einem rechten Antriebsrad und die andere Keilscheiben-Hälfte ist drehfest mit dem anderen Antriebsrad verbunden, so daß sich die Keilscheiben-Hälften und somit die Antriebsräder unabhängig voneinander bei ausgeschaltetem Fahrantrieb frei drehen können. Vorzugsweise werden auf diese Weise die Hinterräder angetrieben. Es ist jedoch auch vorgesehen, zusätzlich die Vorderräder über den gleichen Antriebskeilriemen anzutreiben. Bei eingeschaltetem Fahrantrieb und straff gespanntem Antriebskeilriemen werden die beiden Keilscheiben-Hälften zusammen angetrieben und treiben dabei die beiden Antriebsräder mit gleicher Drehzahl an. Über eine weitere Antriebsriemen-Anordnung wird vom Motor eine Messerwelle gegensinnig zu der hinteren Radantriebswelle angetrieben, deren Achse parallel zu den Radachsen liegt. Der Antrieb der Messerwelle erfolgt über einen Riemenantrieb direkt, während zwischen Motor und Antriebskeilriemen ein Schneckengetriebe geschaltet ist.

## Beschreibung

Die Erfindung bezieht sich auf ein insbesondere als Mähgerät ausgebildetes Gerät zur intensiven Rasenpflege. Das Gerät besitzt einen motorischen Antrieb für Schneidwerkzeuge und für die Räder, wobei die Kraftübertragung von der Motorabtriebswelle nach den Werkzeugen bzw. den Antriebsrädern über Keilriemen erfolgt und der Werkzeugantrieb unabhängig vom Fahrantrieb schaltbar ist. Insbesondere bezieht sich die Erfindung auf ein handgeführtes Gerät, welches besonders für die extensive Landschaftspflege, aber auch zur Bearbeitung normaler Rasenflächen, geeignet ist.

Die DE 42 22 578 C2 zeigt ein fahrbares Gartengerät mit Motorantrieb für Werkzeug und Räder, bei dem die Fahrgeschwindigkeit über ein den Antriebsrädern vorgeschaltetes Keilscheibengetriebe mit kontinuierlich veränderbarem Übersetzungsverhältnis einstellbar ist. Das Übersetzungsverhältnis wird dabei geändert, indem der wirksame Radius der Antriebskeilriemenscheibe geändert wird. Zu diesem Zweck ist die Antriebskeilriemenscheibe in zwei Riemenscheibenhälften unterteilt, die axial gegeneinander verschiebbar sind, die jedoch immer gemeinsam durch die Antriebswelle antreibbar sind.

Der Erfindung liegt die Aufgabe zugrunde, ein gattungsgemäßes Gerät zu schaffen, welches einfach aufgebaut ist, eine gleichbleibende Fahrgeschwindigkeit gewährleistet und bei welchem ohne Verwendung eines Differentialantriebes unterschiedliche Drehzahlen der Antriebsräder möglich sind, ohne ein Durchrutschen befürchten zu müssen.

Gelöst wird die gestellte Aufgabe durch die im Kennzeichnungsteil des Patentanspruchs 1 angegebenen Merkmale. Durch die Erfindung wird erreicht, daß bei ausgeschaltetem Fahrantrieb die Antriebsräder sich völlig frei gegeneinander drehen können, ohne daß zusätzliche Kupplungen erforderlich sind. Dadurch wird ein müheloses Befahren auch enger Kurven ermöglicht. Bei eingeschaltetem Fahrantrieb kann die Anordnung derart getroffen werden, daß beim Befahren von Kurven ein Schlupf der Räder weitgehend dadurch vermieden wird, daß die Keilriemenscheiben-Hälften durch begrenzten Schlupf gegeneinander verdrehbar sind.

Das Ein- und Ausschalten des Fahrantriebs bzw. die Einstellung des Keilscheiben-Schlupfes kann durch eine Spannrolle erfolgen, die eine vorbestimmte Spannung des Keilriemens bewirkt.

Der Fahrantrieb unterstüzt das Arbeiten im unwegsamen Gelände, und das neuartige Antriebskonzept sorgt für eine gleichbleibende Fahrgeschwindigkeit selbst bei Hangabfahrten. Die unabhängig vom Fahrantrieb vom Motor antreibbare Messerwelle kann Schlegelwerkzeuge tragen, wodurch hohes Gras und Gestrüpp geschnitten und feingehäxelt nach hinten abgelegt werden können. Ein solcher Schlegel-Mulchmäher ergibt ausgezeichnete Mähergebnisse, wobei der Einsatz für extensive und auch intensive Rasenpflege geeignet ist. Das Gerät ist einsetzbar als Wiesenmäher, auch im extremen Unterholz. Mit der gleichen Konzeptierung ist das Gerät einsetzbar als angetriebener Vertikutierer. Die Messerwelle ist gegenläufig zu der hinteren Radachse angetrieben, was einen besonders günstigen Schnitt zur Folge hat. Zum Einsatz in ungünstigem Gelände kann das Gerät zusätzlich mit einem Vorderradantrieb ausgerüstet sein, wobei der Antriebskeilriemen eine weitere Riemenscheibe auf der starren Vorderradachse antreibt.

Die Erfindung ist jedoch auch für alle anderen Arbeitsgeräte mit Fahrantrieb anwendbar, bei denen eine unterschiedliche Drehzahl der rechten und linken Antriebsräder beim Kurvenfahren erwünscht ist.

Das Gerät kann mit verschiedenen Messerwellen ausgestattet werden, beispielsweise mit Federstahlmessern, mit Pendelmessern, als Vertikutierer und mit doppelten Feinstschlegelmessern zum Einsatz als Rasenmäher für Grünflächen.

Ausgestaltungen der Erfindung ergeben sich aus den Unteransprüchen.

Nachstehend wird als Ausführungsbeispiel der Erfindung ein Schlegelmäher anhand der Zeichnung beschrieben. In der Zeichnung zeigen:

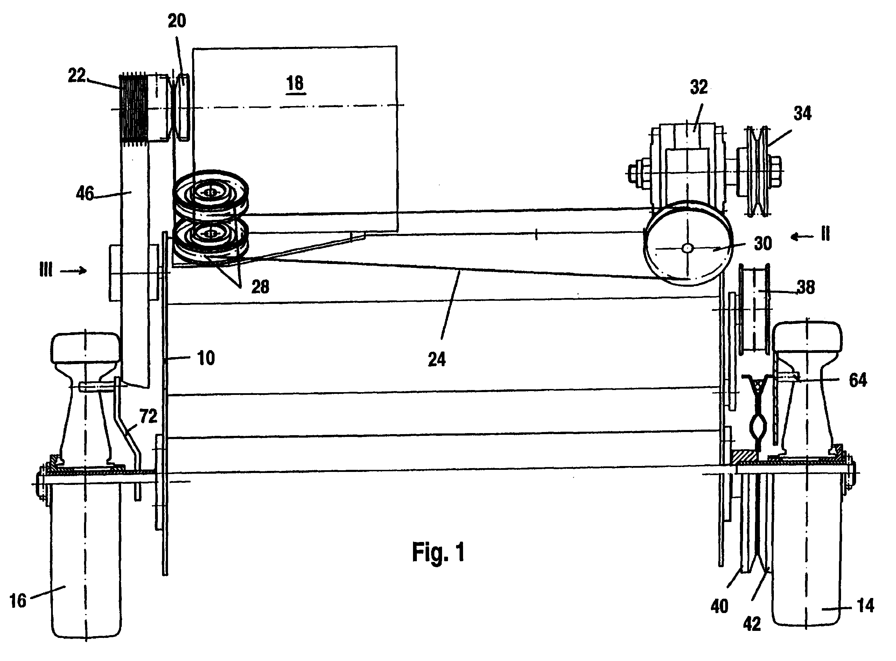

Fig. 1 zeigt eine schematische Ansicht des die Antriebsräder aufweisenden, hinteren Teils des Gerätes, entgegen der Fahrtrichtung betrachtet;

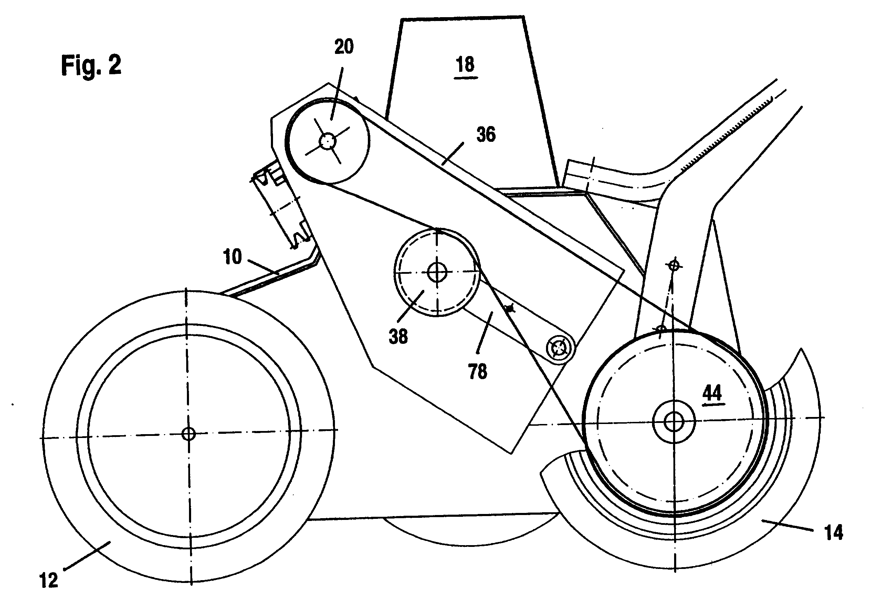

Fig. 2 zeigt eine Seitenansicht des Gerätes, betrachtet in Richtung des Pfeiles II gemäß Fig. 1;

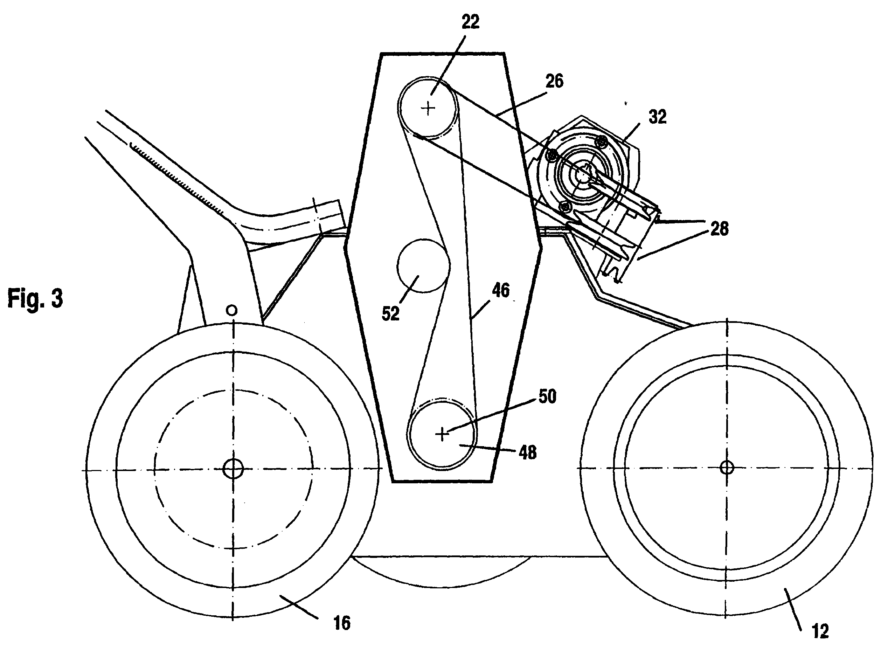

Fig. 3 zeigt eine Seitenansicht des Gerätes, betrachtet in Richtung des Pfeiles III gemäß Fig. 1;

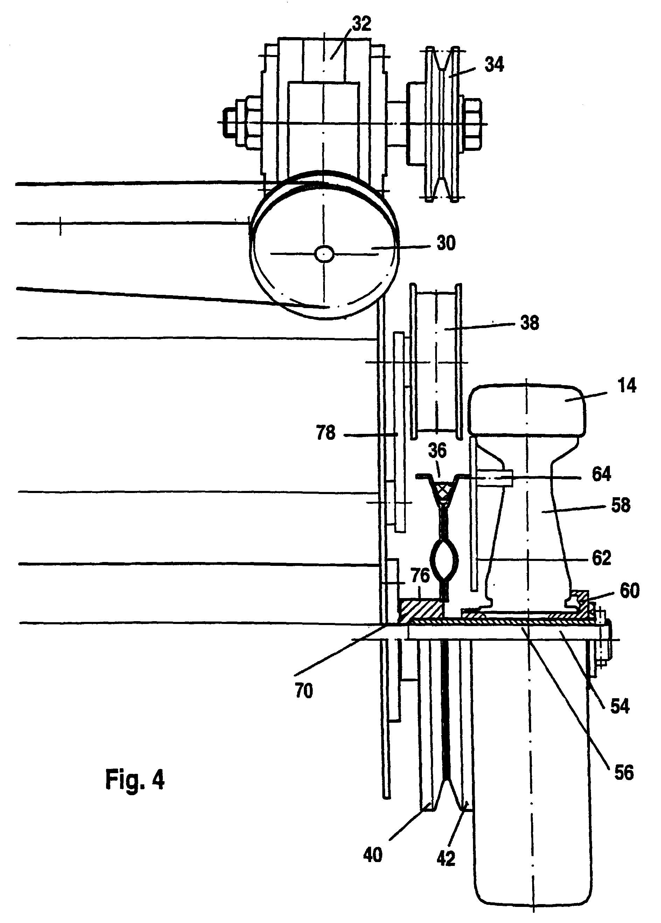

Fig. 4 zeigt in größerem Maßstab eine Teilansicht des Fahrantriebs für das linke Antriebsrad;

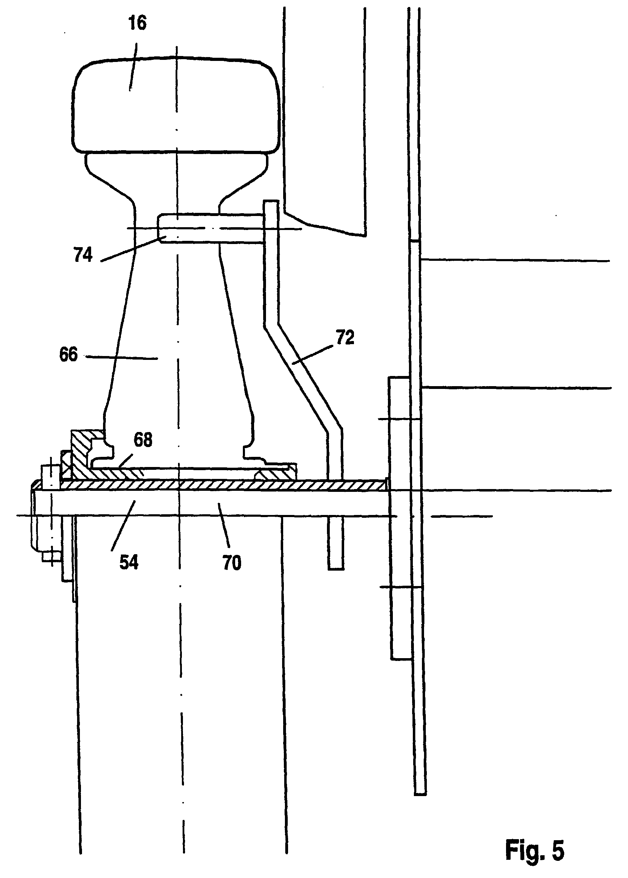

Fig. 5 zeigt in größerem Maßstab eine Teilansicht des Fahrantriebs für das rechte Antriebsrad;
Fig. 6 zeigt eine der Fig. 2 entsprechende Seitenansicht eines Gerätes mit zusätzlichem Vorderradantrieb.

Die über eine horizontal angeordnete Abtriebswelle angetriebenen Werkzeuge sind nur schematisch angedeutet. So kann das Gerät beispielsweise als Schlegelmäher oder als Vertikutierer ausgebildet sein. Die Erfindung kann jedoch auch in Verbindung mit anderen Geräten eingesetzt werden, die einen Fahrantrieb in Verbindung mit einem Werkzeugantrieb, insbesondere mit einem Werkzeugantrieb mit horizontaler Welle, benötigen.

Das Gerät weist einen Chassisrahmen 10 auf, der die nicht angetriebenen Vorderräder 12 und die angetriebenen Hinterräder, nämlich das linke Antriebshinterrad 14 und das rechte Antriebshinterrad 16 lagert (dabei sind die Begriffe rechts und links in Fahrtrichtung gesehen zu verstehen).

Der Chassisrahmen 10 trägt einen Motor 18, dessen Abtriebswelle eine erste Keilriemenscheibe 20 für den Fahrantrieb und eine zweite Keilrippenscheibe 22 für den Werkzeugantrieb trägt. Die Achse 24 der Motorabtriebswelle liegt parallel zu den Radachsen. Über die erste Keilriemenscheibe ist ein Fahrantriebsriemen 26 geführt, der über Umlenkrollen 28 zu einer Antriebsriemenscheibe 30 eines Schneckengetriebes 32 läuft. Die Abtriebswelle des Schneckengetriebes 32 trägt eine Abtrieberiemenscheibe 34. In diese Abtriebsriemenscheibe 34 greift ein Antriebskeilriemen 36, der über eine Spannrolle 38 geführt ist und eine, aus zwei unabhängig voneinander drehbaren Hälften 40 und 42 bestehende, Keilriemenscheibe 44 antreibt. Die Keilriemenscheiben-Hälfte 40 ist mit dem rechten Antriebshinterrad 16 drehfest verbunden, und die Keilriemenscheiben-Hälfte 42 steht mit dem linken Antriebshinterrad 14 in Antriebsverbindung.

Die zweite Keilrippenscheibe 22 treibt über einen Keilrippenriemen 46 eine Keilriemenscheibe 48 an, die auf der Messerwelle 50 sitzt und die im einzelnen nicht dargestellten Werkzeuge antreibt. Die Messerwelle 50 liegt parallel zu den Radachsen. Eine Spannrolle 52 spannt den Antriebskeilrippenriemen 46. Die beiden Antriebsräder 14 und 16 sind auf einer gemeinsamen Radachse 54 drehbar gelagert. Im Bereich des Antriebsrades 14 trägt die Radachse 54 eine Hohlwelle 56, die die Radnabe 58 über ein Kunststofflager 60 trägt. Die Keilriemenscheiben-Hälfte 42 ist auf der Radachse 54 frei drehbar und mit einem Mitnehmerarm 62 verbunden, der mit einem Mitnehmerstift 64 in die Nahe 58 eingreift und dadurch drehfest mit dieser verbunden ist.

Die Nahe 66 des rechten Antriebshinterrades 16 ist über ein Kunststoffbuchsenlager 68 auf einer Hohlwelle 70 gelagert, mit der ein Mitnehmerarm 72 drehfest verbunden ist. Der Mitnehmerarm 72 trägt einen Stift 74, der in die Nabe 66 einsteht und das Antriebshinterrad 16 drehfest mit der Hohlwelle 70 verbindet. Die Hohlwelle 70 umfaßt an ihrem dem Radlager des Rades 4 zugewandten Ende mit einem Bund 76 die Hohlwelle 56 und ist auf dieser drehbar. Dieser Bund 76 trägt die Keilriemenscheiben-Hälfte 40 und wird von dieser angetrieben.

Die auf einem Schwenkarm 78 sitzende Spannrolle 38 dient zum Einschalten bzw. Ausschalten des Fahrantriebs. In der Fahrstellung spannt die Rolle 38 den Riemen 36, der beide Keilscheiben-Hälften 40, 42 gemeinsam antreibt. Bei abgeschaltetem Fahrantrieb läuft der Keilriemen 36 über die Keilscheiben-Hälften, ohne diese anzutreiben. Die beiden Hinterräder 14 und 16 können sich demgemäß unabhängig voneinander drehen, wodurch eine problemlose Kurvenfahrt bei abgeschaltetem Fahrantrieb möglich wird.

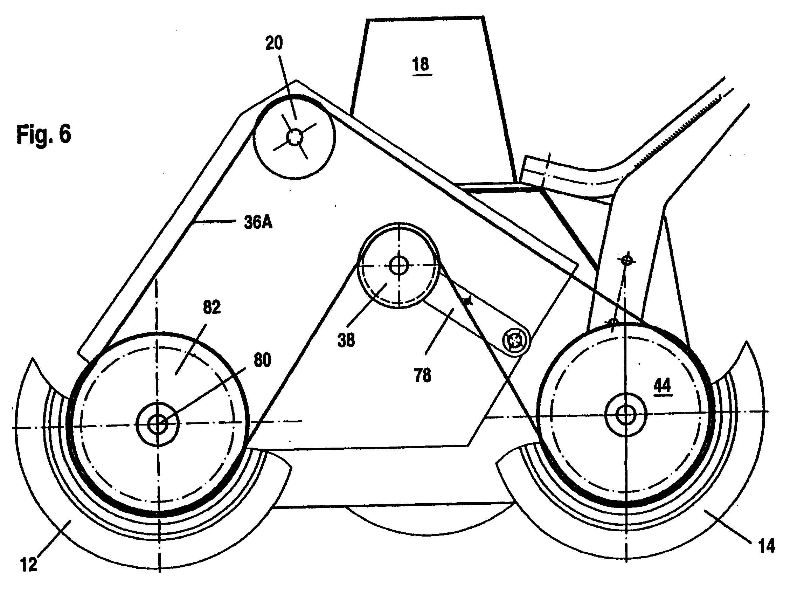

Die Figur 6 zeigt die Seitenansicht eines Gerätes bei dem zusätzlich zu dem Antrieb der Hinterräder ein Antrieb für die Vorderräder 12 vorgesehen ist, wodurch der Einsatz in unwegsamen Gelände oder an steileren Hängen erleichtert wird. Zu diesem Zweck ist die starre Vorderradachse 80 mit einer Keilriemenscheibe 82 versehen, die in der gleichen Ebene wie die Keilriemenscheiben 20 und 44 liegt. Der Antriebskeilriemen 36A ist über die Keilriemenscheibe 44 der Hinterräder und zusätzlich über die drehfest auf der Vorderradachse 80 sitzende Keilriemenscheibe 82 geführt. Die Keilriemenscheibe 82 und die Vorderradachse 80 können in gleicher Weise ausgeführt sein, wie die geteilte Keilriemenscheibe 44 mit den Hohlwellen, jedoch ist eine solche Anordnung im allgemeinen nicht erforderlich, weil bei einer Kurvenfahrt die Vorderräder durch Kippen des Gerätes um die Hinterräder angehoben werden können, wenn ein Durchfahren enger Kurven erforderlich ist.

### Bezugszeichenliste

- 10: Chassisrahmen
- 12: Vorderräder
- 14: linkes Antriebshinterrad
- 16: rechtes Antriebshinterrad
- 18: Motor
- 20: erste Keilrippenscheibe (Fahrantrieb)
- 22: zweite Keilriemenscheibe (Werkzeugabtrieb)
- 24: Achse
- 26: Fahrantriebsriemen
- 28: Umlenkrollen
- 30: Antriebsriemenscheibe
- 32: Schneckengetriebe
- 34: Abtriebsriemenscheibe
- 36: Antriebskeilriemen
- 36A: Antriebskeilriemen
- 38: Spannrolle
- 40: Hälfte
- 42: Hälfte
- 44: Keilriemenscheibe
- 46: Keilrippenriemen
- 48: Keilriemenscheibe
- 50: Messerwelle
- 52: Spannrolle
- 54: Radachse
- 56: Hohlwelle
- 58: Radnabe
- 60: Kunststofflager
- 62: Mitnehmerarm
- 64: Mitnehmerstift
- 66: Nabe
- 68: Kunststoffbuchsenlager
- 70: Hohlwelle
- 72: Mitnehmerarm
- 74: Stift
- 76: Bund
- 78: Schwenkarm
- 80: Vorderradachse
- 82: Keilriemenscheibe

## Patentansprüche

1. Insbesondere als Mähgerät ausgebildetes Gerät zur Rasenpflege mit motorischem Antrieb für die Schneidwerkzeuge und für die Antriebsräder, bei welchem die Kraftübertragung von der Motorabtriebswelle nach den Werkzeugen bzw. den Antriebsrädern (14, 16) über Keilriemen (46 bzw. 24, 35) erfolgt, und der Werkzeugantrieb vom Fahrantrieb schaltbar ist,
dadurch gekennzeichnet, daß die Antriebs-Keilriemenscheibe (44) für den Fahrantrieb in zwei unabhängig voneinander drehbare Keilriemenscheiben-Hälften (40, 42) unterteilt ist, von denen die eine Keilriemenscheiben-Hälfte (40) drehfest mit dem rechten Antriebsrad (16) und die andere Keilriemenscheiben-Hälfte (42) drehfest mit dem linken Antriebsrad (14) verbunden ist.

2. Gerät nach Anspruch 1,
dadurch gekennzeichnet, daß der die Antriebs-Keilriemenscheibe (40, 42) antreibende Keilriemen (36) über eine Spannrolle (38) läuft, die zur Ein- bzw. Abschaltung des Fahrantriebs den Riemen spannt bzw. lockerläßt.

3. Gerät nach Anspruch 1 oder 2,
dadurch gekennzeichnet, daß in den Fahrantrieb zwischen Motor (18) und Antriebs-Keilriemenscheibe (40, 42) ein vorzugsweise als Schneckengetriebe (32) ausgebildetes Untersetzungsgetriebe angeordnet ist.

4. Gerät nach Anspruch 1,
dadurch gekennzeichnet, daß die Antriebsräder (14, 16) von einer durchgehenden Achse (24) getragen werden.

5. Gerät nach Anspruch 1 oder 2,
dadurch gekennzeichnet, daß die Antriebsräder (14, 16) drehtest mit Hohlwellen (56 bzw. 70) verbunden sind, die unabhängig voneinander auf der Achse (54) drehbar und mit je einer Keilriemenscheiben-Hälfte (42 bzw. 40) drehfest verbunden sind.

6. Gerät nach einem der Ansprüche 1 bis 5,
dadurch gekennzeichnet, daß die Keilriemenscheiben-Hälften (40 bzw. 42) drehfest mit Mitnehmerarmen (62, 72) verbunden sind, die über Mitnehmerstifte (64 bzw. 74) in Ausnehmungen der Radnaben (58, 66) eingreifen.

7. Gerät nach einem der Ansprüche 1 bis 6,
dadurch gekennzeichnet, daß die Messerantriebswelle (50) von der Motorwelle direkt über einen Keilrippenriemen (46) angetrieben ist.

8. Gerät nach einem der Ansprüche 1 bis 7,
dadurch gekennzeichnet, daß die Messerwelle (50) gegensinnig zu der Antriebshohlwelle (56, 70) für die Hinterräder angetrieben wird.

9. Gerät nach einem der Ansprüche 1 bis 8,
dadurch gekennzeichnet, daß die Antriebs-Keilriemenscheibe (40, 42) antriebsmäßig mit den Hinterrädern (16, 14) verbunden ist.

10. Gerät nach einem der Ansprüche 1 bis 9,
dadurch gekennzeichnet, daß über den Antriebskeilriemen (36A) zusätzlich die Vorderräder antreibbar sind.

11. Gerät nach einem der Ansprüche 1 bis 10,
dadurch gekennzeichnet, daß auf der die Vorderräder (12) drehfest tragenden Vorderradachse (80) eine Keilriemenscheibe (82) aufgesetzt ist, über die der Antriebskeilriemen (36A geführt ist.
